# EUROPÄISCHE PATENTSCHRIFT

(11) **EP 1 322 447 B1**
(45) Veröffentlichungstag und Bekanntmachung des Hinweises auf die Patenterteilung: **17.05.2006**
(21) Anmeldenummer: 01974030.7
(22) Anmeldetag: 07.09.2001
(51) Int. Cl.: B23Q 9/00, B23Q 35/10, B23Q 35/42

(54) **ELEKTROWERKZEUG MIT UNIVERSALAUFNAHME FÜR EINSATZWERKZEUGE**
ELECTRIC TOOL COMPRISING A UNIVERSAL MOUNTING FOR TOOL ATTACHMENTS
OUTIL ELECTRIQUE COMPRENANT UNE PARTIE DE RECEPTION UNIVERSELLE DESTINEE A RECEVOIR DES OUTILS ENCASTRABLES

(30) Priorität: 22.09.2000 DE 10047164
(43) Veröffentlichungstag der Anmeldung: 02.07.2003
(73) Patentinhaber: ROBERT BOSCH GMBH, 70442 Stuttgart (DE)
(72) Erfinder: BERGNER, Joao, 71134 Aidlingen (DE); ENGELFRIED, Uwe, 73760 Ostfildern (DE); NOACK, Martin, 70771 Leinfelden (DE); BAUMGARTNER, Klaus, 71067 Sindelfingen (DE)
(86) Internationale Anmeldenummer: PCT/DE2001/003448
(87) Internationale Veröffentlichungsnummer: WO 2002/026439

(56) Entgegenhaltungen:
- DE-A- 3 706 832
- US-A- 4 776 374
- US-A- 5 038 651

## Beschreibung

### Technisches Gebiet

Elektrowerkzeuge sowohl für den Heimwerkerbedarf als auch für Handwerker müssen für eine Vielzahl unterschiedlicher Einsatzzwecke geeignet sein, um genügend Abnehmer zu finden. Für die verschiedensten Einsatzzwecke des Elektrowerkzeuges, können von Einsatzzweck zu Einsatzzweck Umrüstungen am Elektrowerkzeug erforderlich sein, die möglichst ohne zusätzliches Werkzeug auszuführen sein sollten. Neben schnell und einfach am Werkzeug vorzunehmenden Umrüstungen, die vorzugsweise über Schnappverschlüsse oder Bajonettverschlüsse erzielbar sind, besteht die Forderung an ein Elektrowerkzeug, das Elektrowerkzeug auch entlang einer Führung bewegen zu können, so daß die Qualität des Arbeitsergebnisses, beispielsweise der Verlauf eines Schnittes oder die Lage einer gefrästen Öffnung, d. h. die Qualität des Arbeitsergebnisses steigt.

### Stand der Technik

Bisher verwendete Kopierhülsen, die als Aufsatzwerkzeuge an Elektrowerkzeugen einsetzbar sind, benötigen eine komplizierte Aufnahme am geräteseitigen Auflagefuß. Handelt es sich beim Aufsatzwerkzeug beispielsweise um Kopierhülsen, so sind dieses beim Innenausbau häufig zu wechseln - so etwa dann, wenn Einfach- oder Mehrfachsteckdosen in Raumwänden oder tragenden Gebäudewänden zu fertigen sind. Das häufige Wechseln der in unterschiedlichen Durchmessern zu setzenden Steckdosenöffnungen beim Innenausbau ist zeitraubend und mühsam. Eine kompliziertere Aufnahme nimmt zusätzlich Zeit in Anspruch und kann bei häufiger Vornahme am Elektrowerkzeug eine Schwachstelle an diesem darstellen, die die Störanfälligkeit einer solchermaßen beschaffenen Elektrowerkzeugkombination erhöht.

Im Innenausbau eingesetzte Elektrowerkzeuge sollten allerdings robust ausgelegt sein, und einfach zu wechselnde Kopierhülsenaufnahmen durch einfaches Aufstecken am Elektrowerkzeug zu befestigen sind, aufweisen.

Diese Aufgabe wird durch ein Elektrowerkzeug mit den Merkmalen des Anspruchs 1 gelöst.

### Darstellung der Erfindung

Die mit der erfmdungsgemäßen Lösung einhergehenden Vorteile, sind vor allem darin zu erblicken, daß das Elektrowerkzeug nunmehr an einer im Auflagefuß bzw. dessen Auflagefläche am Werkstück ausgeformten Führungsnut an einer Führungsschiene entlang geführt werden kann.

Die Abschlußkante der Führungsschiene kann dabei als Referenzkante zur Längsführung des Werkzeuges oder zur Positionierung des Elektrowerkzeuges mit aufgenommenen Einsatzwerkzeug relativ zum Werkstück fungieren. Zur Erleichterung der Längsführung entlang der Führungsschiene kann die in der Auflage vorgesehene Nut, beispielsweise dargestellt durch zwei miteinander fluchtende Einkerbungen am Umfang in eine an einer Führungsschiene ausgebildete Führungsrippe formschlüssig eingelassen werden, so daß ein seitliches Verschieben des Elektrowerkzeuges samt daran aufgenommen Einsatzwerkzeug entlang der Führungsrippe möglich ist. Die Führungsschiene kann dabei als ein universell einsetzbares Werkzeug ausgebildet sein, in welchem eine Schablonenfunktion integriert sein kann, in dem unterschiedliche Schablonen mit unterschiedlichen Durchmessern vorgesehen sind. Damit läßt sich ein bündiges Abschneiden bzw. Abfräsen von Werkstücken, bestehend aus unterschiedlichsten Materialien wie beispielsweise Gips, Holz, Holzwerkstoffen, sei es massives Holz oder Preßspanplatten oder dergleichen, erreichen. Die Abschlußkante der mit einer Führungsrippe versehenen Führungsschiene kann in vorteilhafter Weise als Referenzkante dienen. Andererseits kann mittels einer Führungsschiene mit integrierter Schablonenfunktion diese beispielsweise als Frässchablone für in Raumwänden oder in tragenden Gebäudewänden vorzusehende Steckdoseneinbauten dienen. Die für Steckdosendurchmesser gängigen Fräsöffnungsdurchmesser können an der Schablone vorgesehen werden. Entlang der Führungsrippe der Führungsschiene kann nunmehr durch einfaches Ansetzen der Auflage des Elektrowerkzeuges in gerader Richtung gefräst werden.

Am Auflagefuß des erfindungsgemäß konfigurierten Werkzeuges kann an dort ausgebildeten Verrastungen bzw. Umlaufnuten, die als Aufnahmeelement für ein aufsteckbares Ansatzwerkzeug dienen, in einfacher Weise eine Kopierhülse aufgenommen werden. Die aufsteckbaren und nach Art eines Bajonettverschlußes an der Auflagefläche verrastbaren Werkzeugaufsätze können nach Art eines Bajonettverschlußes nach einer in vertikaler Richtung erfolgenden Aufsteckbewegung wenige Winkelgrade in Umfangsrichtung des Elektrowerkzeuges verdreht werden und sind unmittelbar in ihrer Arbeitsposition zuverlässig fixiert.

Die als Aufsatzwerkzeuge dienenden Kopierhülsen sind aufsteckbare Elemente, werden vorzugsweise aus Kunststoff gefertigt und sind an ihrem Umfang im Bereich eines an der Bodenfläche ansetzenden umlaufenden Stehbundes mit einer Anzahl von Rastzungen versehen. Die Flexibilität der Rastzungen am Stehbund des Aufsatzwerkzeuges kann dadurch erhöht werden, daß die am Stehbund jeweils vorgesehenen Rastzungen beiderseits von Öffnungen umgeben sind, so daß den Rastzungen per se als Kunststoffbauteil ein gewisses Maß an Elastizität, welches eine Einschnappbewegung unterstützt, innewohnt. Die Rastzungen können am schablonenartigen Aufsatzelement beispielsweise im Winkel von 90° zueinander orientiert sein, so daß das Aufsteckelement an 4 Stellen am Umfang der Auflagefläche fixiert ist. Der Bodenbereich des aus Kunststoff gefertigten schablonenartigen Aufsteckelementes kann je nach gewünschter Bearbeitungstiefe des im Elektrowerkzeug in dessen Spannfutter aufgenommenen Einsatzwerkzeug unterschiedlich eingestellt werden. Über die Konfiguration des Bodenbereiches d.h. der Dicke des Bodenbereiches der Schablone kann die Bearbeitungstiefe durch das Einsatzwerkzeug einerseits eingestellt werden; andererseits ist in vorteilhafter Weise an der Seite des Elektrowerkzeuges eine Vertikalverstellung aufgenommen. Die Vertikalverstellung umfaßt ein Ansatzelement, an welchem mit einer Öffnung die die Werkzeugaufnahme umschließende ringförmige Auflage ausgebildet ist.

An der Vertikalführung ist eine in einer Längsnut laufende mit einem Werkzeug oder über eine Knebelschraube festlegbare Schraube vorgesehen; die Vertikalführung ist als ein nutfönniges Profil ausgebildet. Damit kann der Abstand des Elektrowerkzeuges bzw. des darin aufgenommenen Einsatzwerkzeuges von der Auflagefläche der Auflage eingestellt werden, so daß auch mit der Vertikalverstellung die Bearbeitungstiefe durch das Einsatzwerkzeug justierbar ist.

### Zeichnung

Anhand der Zeichnung wird die Erfindung nachstehend detaillierter erläutert.

Es zeigt:
- Figur 1: eine perspektivische Ansicht eines am Elektrowerkzeug ausgebildeten Spannrings, der in einem Profil vertikal verstellbar ist, wobei die Auflagefläche des Elektrowerkzeuges auf der Führungsrippe einer Führungsschiene aufsitzt,
- Figur 2: einen Querschnitt durch die in Figur 1 dargestellte Konfiguration,
- Figur 3: ein im Spannfutter des Elektrowerkzeuges aufgenommenes Einsatzwerkzeug, umschlossen von der ringförmig konfigurierten Auflage,
- Figur 4: ein vorzugsweise aus Kunststoff gefertigtes schablonenartiges Aufsteckelement für die Auflage des Elektrowerkzeuges,
- Figur 5: eine in schematischer Darstellung wiedergegebene, in der Auflagefläche des Elektrowerkzeuges vorgesehene, eine Bajonettverschluß erlaubende Öffnung,
- Figur 6a, b und c: eine Darstellung eines aus Kunststoff gefertigten, schablonenartigen Aufstekkelementes mit zentraler Bohrung und 4 an den Umfangsflächen (vergl. Darstellung in Figur 4) vorgesehenen federnden Rastzungen und
- Figur 7: eine Führungsschiene mit integrierter Schablonenfunktion wobei die unterschiedlichen Schablonen in gängigen Standarddurchmessern für Steckdosen ausgestaltet sein können.

### Ausführungsvarianten

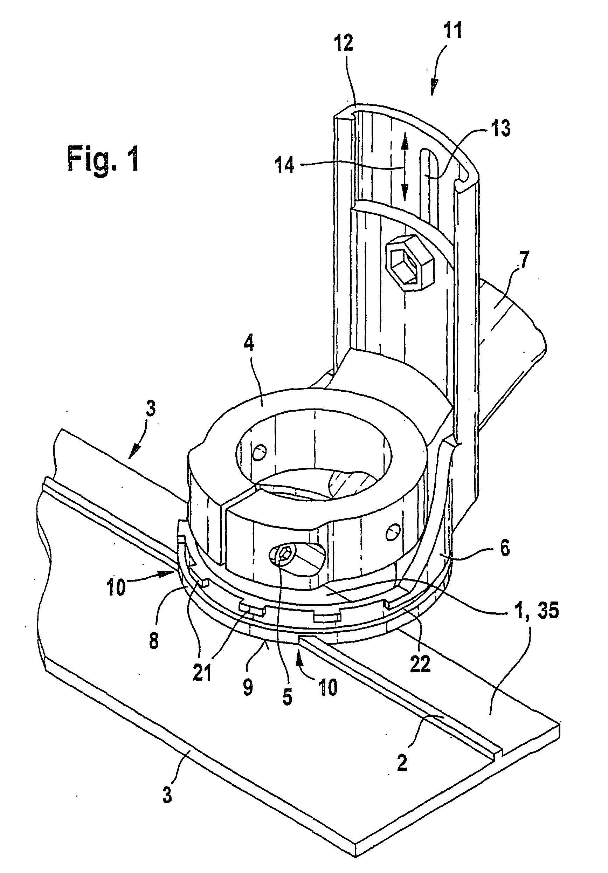

Aus der Darstellung gem. Figur 1 geht eine perspektivisch wiedergegebene Ansicht einer auf eine Führungsschiene mit Führungsrippe aufgesetzten Auflagefläche hervor, welche an einem Ansatz aufgenommen ist, in welchem ein das Elektrowerkzeug aufnehmender Spannring in vertikaler Richtung verschiebbar ist.

Die mit dem Bezugszeichen 1,35 versehene Führungsschiene ist mit einer sich parallel zur Längserstreckung der Führungsschiene 1,35 erstreckenden Führungsrippe 2 versehen. Die Führungsrippe 2 steht erhaben über die Fläche der Führungsschiene 1,35 hervor. Die Führungsschiene 1,35 ist beiderseits von Kanten 3 begrenzt. Das in der perspektivischen Darstellung gemäß Figur 1 nicht dargestellte Elektrowerkzeug ist mit einer Sitzfläche 18 vom Spannring 4 umschlossen, wobei die Vorspannung im Spannring 4 durch eine Spannschraube 5 erzeugt wird. Der Spannring 4 ist in einem Führungsprofil 12 in vertikaler Richtung gemäß des Doppelpfeiles 14 verschiebbar, wobei die Relativposition zwischen dem Fortsatz des Spannringes 4 und dem Führungsprofil 12 durch eine Längsnut 13 und den Fortsatz des Spannringes 4 durchsetzende betätigbare Knebelschraube festlegbar ist.

Das den Fortsatz des Spannringes 4 an beiden Seiten umgreifende Profil 12 dient als Vertikalführung, an welchem seitlich geneigt im Spanaustrag 7 angeordnet ist.

Die erfindungsgemäß konfigurierte Auflage 8, 9, die mit ihrer Auflagefläche 9 auf der Planseite der Führungsschiene 1 aufsitzt, ist im Bereich der Führungsrippe 2 mit einander gegenüberliegenden Einkerbungen 10 an der Auflagefläche 9 versehen. Durch die Einkerbungen 10 in der ringförmig konfigurierten Auflagefläche 9 der Auflage 8 wird eine Längsnut gebildet, welche ein Verschieben der Auflage 8 entlang der Führungsrippe 2 der hier in schematischer Darstellung wiedergegebener Führungsschiene 1,35 gestattet.

Darüber hinaus sind am Außenumfang der Auflage 8,9 Rastnasen 21 ausgebildet, zwischen denen und der Auflagefläche 9 eine umlaufende Nut 22 vorgesehen sein kann.

Aus der Darstellung gemäß Figur 1 geht hervor, daß gemäß dieser Ausführungsvariante der erfindungsgemäß vorgeschlagenen Lösung die Auflage 8,9 ohne Zwischenschaltung eines Aufsatzelementes direkt entlang einer Führungsschiene 1 entlang der dort konfigurierten Führungsnut 2 in gerader Richtung verschiebbar ist.

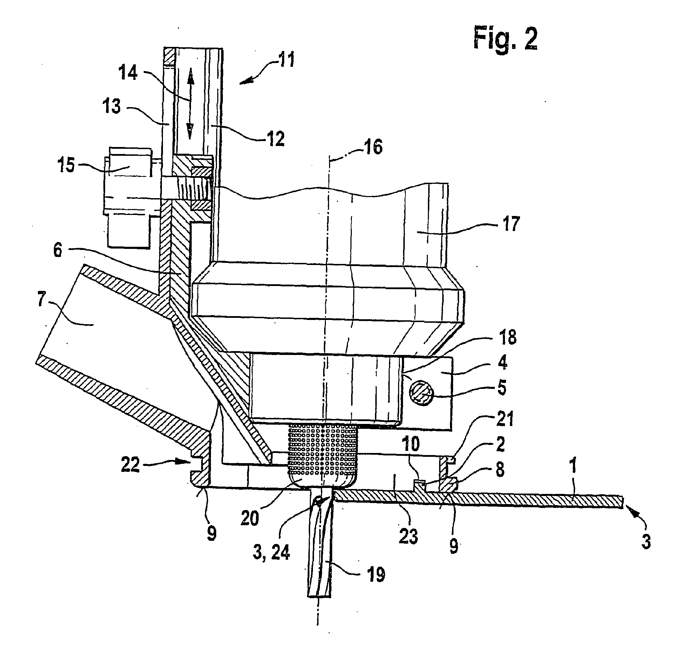

Aus der Darstellung gemäß Figur 2 geht ein Schnitt durch die Anordnung gemäß Figur 1 näher hervor. Im oberen Bereich der Figur 2 ist die Vertikalführung des Elektrowerkzeuges 11 dargestellt, welche eine Vertikalbewegung des Fortsatzes des Spannringes 4 darstellt, welcher von einem durch eine Längsnut 13 durchbrochenen Führungsprofils 12 umschlossen ist. Am Fortsatz befestigt die Längsnut 13 durchsetzend, ist am Führungsprofil 12 eine von außen bedienbare Knebelschraube 15 vorgesehen, mit welcher die Relativposition des Fortsatzes des Spannringes 4 und des Führungsprofils 12 zueinander festlegbar ist. Sodann ist das am Ansatz 6 aufgenommene Elektrowerkzeug 17 im Bezug an die am Führungsprofil 12 vorgesehene ringförmig konfigurierte Auflage 8 bzw. 9 in vertikaler Richtung festgelegt.

Im unteren Bereich der Figur 2 ist die Führungsschiene 1,35 im Querschnitt dargestellt, an welcher eine senkrecht zur Zeichenebene verlaufende Führungsrippe 2 ausgebildet ist. Die Führungsrippe 2 ist in der Darstellung gemäß Figur 2 von nutförmigen Ausnehmungen im Auflagebereich 9 der Auflage 8 umschlossen, so daß sich eine exakte Führung des Umfangs des Einsatzwerkzeuges 19, aufgenommen im Spannfutter 20, in bezug auf die Kante 3, 24 der Führungsschiene einstellt. Dadurch ist eine exakte Führung des Elektrowerkzeuges 17 mit daran aufgenommenem Einsatzwerkzeug 19 entlang der Führungsschiene 1 durch Formschluß zwischen den Aufnahmen 10 und der Führungsrippe 2 möglich.

Erwähnt sei noch, daß am Ansatz 6 ein eine Spanabsaugung ermöglichender Ansatzstutzen ausgebildet ist, der geneigt zur Symmetrieachse 16 des Elektrowerkzeuges 7 verlaufend ausgebildet ist.

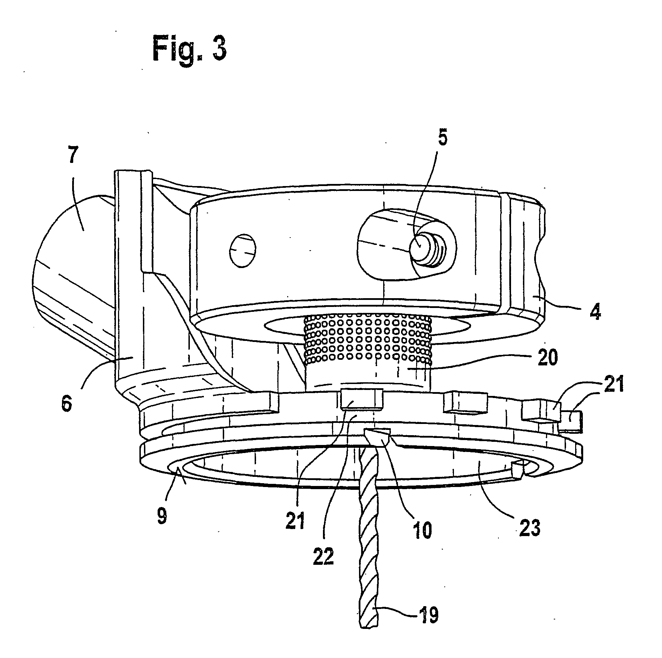

Aus der Darstellung gemäß Figur 3 geht eine perspektivische Draufsicht auf den unteren Bereich des Elelctrowerkzeuges 17 näher hervor. Mit Bezugszeichen 4 ist der die Sitzfläche 18 des Elektrowerkzeuges 17 umschließende Spannring bezeichnet, mit welchem eine Radialspannung durch Anziehen der Knebelschraube 5 erzielbar ist. Seitlich an der Auflage 8 bzw. der ringförmig konfigurierten Auflagefläche 9 ist ein Ansatz 6 dargestellt, welcher sich nach oben in ein Führungsprofil verjüngt, an welchem seitlich analog zur Darstellung gemäß Figur 2 der Spanaustrag 7 ausgebildet sein kann.

Unterhalb des die Anlagefläche 18 des Elektrowerkzeuges 17 umschließenden Spannringes 4 befindet sich ein Spannfutter 20 mit einer rauhen Oberfläche, so daß dessen manuelle Handhabung zum Öffnen und Schließen erleichtert ist. Im Spannfutter 20 des Elektrowerkzeuges 17 ist in der Darstellung gemäß Figur 3 ein Einsatzwerkzeug 19 in Gestalt eines Fräsers aufgenommen.

Die Auflage 8 bzw. die Auflagefläche 9 umfaßt mehrere in Umfangsrichtung nebeneinanderliegend angeordnete Ratnasen 21, wobei zwischen den Rastnasen 21 und der Anlagefläche 9 an der Anlage 8 eine Umlaufnut 22 ausgebildet sein kann.

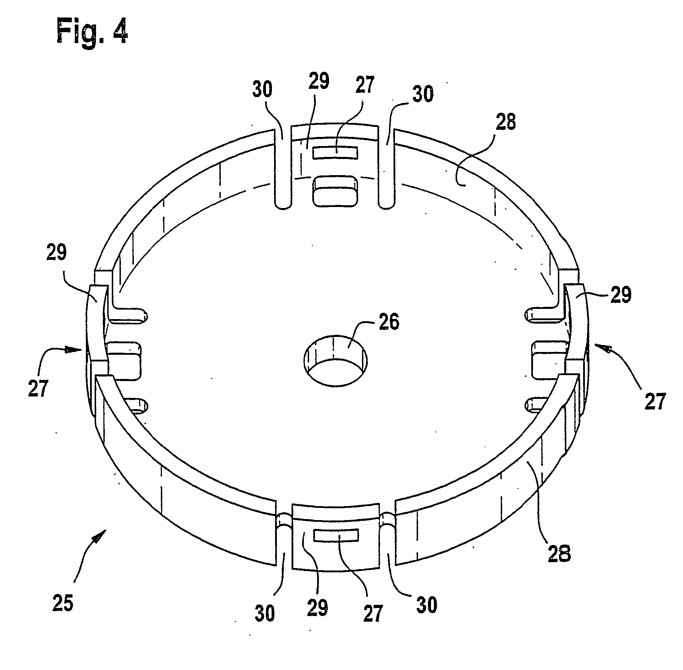

Aus der Darstellung gemäß Figur 4 geht ein vorzugsweise aus Kunststoff gefertigtes aufsteckbares Schablonenelement näher hervor.

Das Schablonenelement 25 ist zentral von einer Öffnung 26 durchsetzt, welche durchaus auch einen anderen Durchmesser als in der Figur 4 dargestellt aufweisen kann. Aus der Darstellung gemäß Figur 4 geht hervor, daß sich an dem Bodenbereich des schablonenartigen Aufsteckelementes 25 ein Stehbund 28 anschließt. Der Stehbund 28 ist um 90° zum Bodenbereich versetzt angeordnet. Bezogen auf eine 360° Erstreckung des Stehbundes 28 sind an diesem im Winkel von 90° zueinander versetzt jeweils 4 Rastzungen 29 ausgebildet. Jede der Rastzungen 29 ist vom verbleibenden Stehbundmaterial durch jeweils eine Öffnung 30 getrennt. Dadurch wohnt den Rastzungen 29 ein höheres Maß an Elastizität bzw. Flexibilität inne, verglichen mit den verbleibenden Sektionen des Stehbundes 28 des schablonenartigen Aufsteckelementes 25. An den einzelnen Rastzungen 29 können beispielsweise Öffnungen 27 vorgesehen sein, wobei an den Rastzungen 29 durchaus auch stiftförmige Vorsprünge ausgebildet sein können. Neben den in der Darstellung gemäß Figur 4 am schablonenartigen Aufsteckelement ausgebildeten 4 um jeweils 90° zueinander versetzt angeordneten Rastzungen 29 können am Aufsteckelement 25 durchaus auch lediglich 3 zueinander um 120° versetzt angeordnete Rastzungen oder auch mehr als 4 Rastzungen 29 vorgesehen sein.

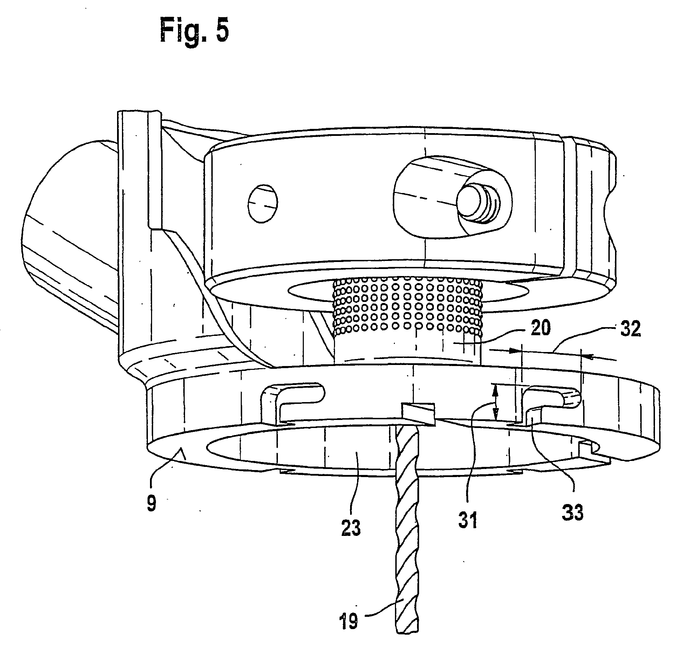

Aus der Darstellung gemäß Figur 5 geht die Beschaffenheit einer Auflagefläche 9 an einem Elektrowerkzeug 17 näher hervor, wobei in der Auflagefläche 9 einen Bajonettverschluß aufnehmende Öffnungen vorgesehen sind.

In der das Einsatzwerkzeug 19 umschließenden ringförmigen Auflage 9, befinden sich am an der Auflage 8 an deren Umfang jeweils mehrere Bajonettverschluß erlaubende strichförmige Aussparungen. Diese weisen parallel zur Aufsteckrichtung des Einsatzwerkzeuges 19 Öffnungen 33 auf, welche sich gemäß des Pfeiles 31 in Aufsteckrichtung des Aufstekkelementes erstrecken. Die in sich Aufsteckrichtung 31 erstreckenden Öffnungen 33 gehen in eine um 90° dazu verlaufende Bajonettverschlußöffnung 32 über. Durch die solcherart konfigurierten Öffnungen in der Auflage 8 des Elektrowerkzeuges 17 lassen sich Aufstekkelemente gemäß Figur 4 oder auch anders konfigurierte Kopierhülsen oder dergleichen in einfacher Weise mit wenigen Handgriffen an der Auflage 8 bzw. 9 des Elektrowerkzeuges 17 befestigen, ohne das der Einsatz eines Schlüssels oder eines anderen Werkzeuges notwendig wäre.

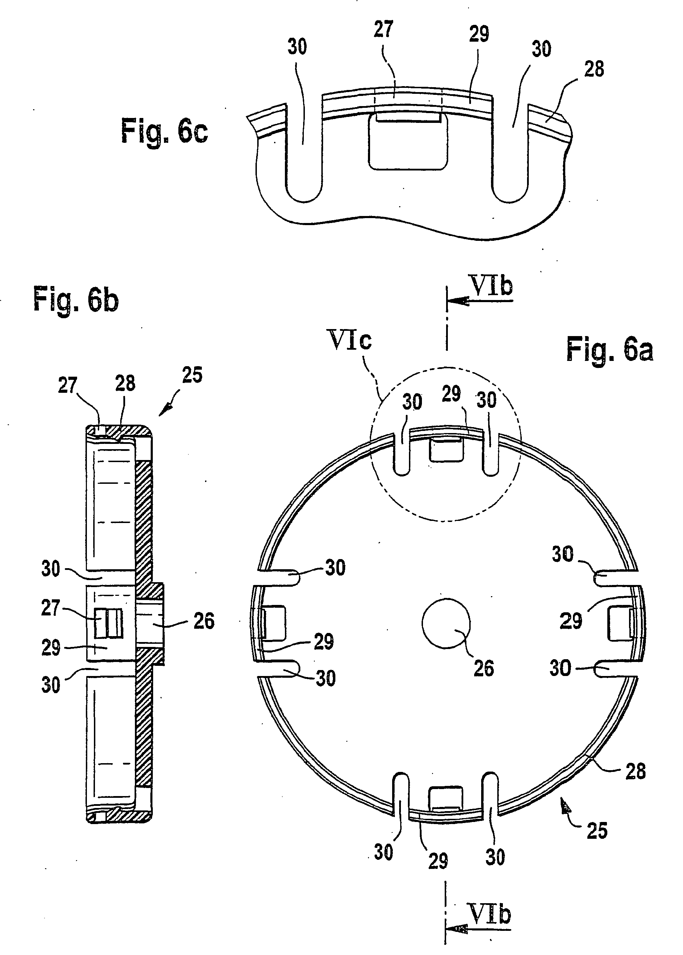

Aus der Darstellung gemäß Figur 6 geht die Konfiguration des Aufsteckwerkzeuges 25 in größerem Maßstab näher hervor.

Analog zur in Figur 4 perspektivisch wiedergegebenen Darstellung des schablonenartig konfigurierten Aufsteckelementes 25 ist dieses entlang seines Umfangs mit beispielsweise 4 Rastzungen 29 versehen. Durch im Stehbund 28 ausgebildete Aussparungen 30 wohnt den Rastzungen 29 ein hohes Maß an Flexibilität inne, so daß diese durch eine nacheinander erfolgende Aufsteckbewegung durch eine nur minimale Verdrehbewegung an der Auflage 8 in ihrer jeweiligen Position an der Auflagefläche 9 des am Elektrowerkzeug 17 festlegbar sind. In der Mitte des Bodenbereiches des schablonenartig konfigurierten Aufstekkelementes ist eine zentrale Bohrung 26 vorgesehen, die außer der in Figur 6 dargestellten Größe auch wesentlich größer in ihrem Durchmesser konfiguriert sein kann. Die gemäß in Figur 6 in Draufsicht, Seitenansicht sowie in Detailansicht gezeigten schablonenartigen Aufsteckelemente 25 werden in der Regel in Schablonensätzen gefertigt und lassen sich je nach Erfordernis des Durchmessers 26 beispielsweise zur Herstellung von Öffnungen für Steckdosen beim Innenausbau vielseitig einsetzen.

Im oberen Bereich der Darstellung gemäß der Figuren 6a, b, c ist eine Rastzunge 29 in vergrößerter Darstellung wiedergegeben, die beidseitig von Öffnungen 30 eingegrenzt ist, die der Rastzunge 29 per se eine größere Elastizität verleihen, damit ein leichteres Einrasten an der Auflage, d.h. der Umfangsnut 22 ermöglicht wird.

Aus der Darstellung des Querschnittes durch das schablonenartig konfigurierte Aufsteckelement 25 geht hervor, daß die Öffnung 26 in einen Bund am Bodenbereich des schablonenartig konfigurierten Aufsteckelementes 25 ausläuft, welcher beim Aufstecken des schablonenartigen Aufsteckelementes 25 auf der Auflage 8 bzw. 9 des Elektrowerkzeuges 17 vom am Spannfutter 20 des Elektrowerkzeug 17 aufgenommenen Einsatzwerkzeug in axialer Richtung durchstoßen wird. Aus der Querschnittsdarstellung gemäß Figur 6 ist entnehmbar, daß die Rastzungen (29) im Bereich des geschwächten Stehbundes 28 Vorsprünge enthalten, mit welchen das schablonenartig konfigurierte Aufsteckelement 25 an der Umfangsnut 22 der Auflage 8 bzw. mit dem im Bereich der Rastzungen vorgesehenen Durchbrechungen 27 an den Rastnasen 21 am Außenumfang der Auflage 8 befestigt werden kann, durchaus nach Art eines Bajonettverschlußes, wie in Figur 5 dargestellt.

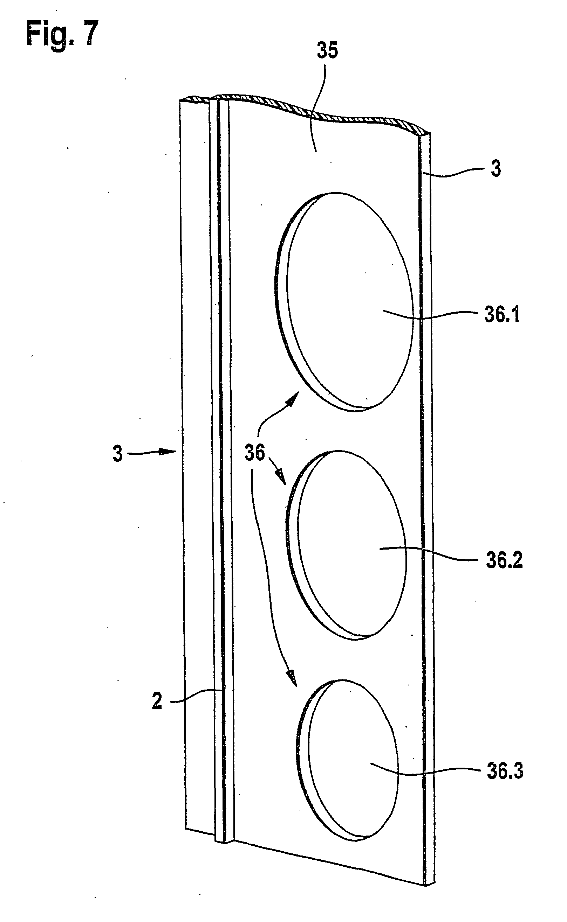

Aus der Darstellung gemäß Figur 7 geht die Konfiguration einer Führungsschiene 35 hervor, an welcher parallel zur Längserstreckung der Führungsschiene 35 eine Führungsrippe 2 erstreckt. Die Führungsrippe 2 verläuft parallel zu den seitlichen Kanten 3 der Führungsschiene 35. In der Führungsschiene 35 sind neben dem im Kantenbereich 3 ausgeführten erhaben hervorstehenden Führungsrippenelement 2, welches eine Führung eines Elektrowerkzeuges 17 entlang des Kantenbereiches 3 zur Erzeugung eines präzisen Schnittes oder einer präzisen Kante gestattet, Öffnungen unterschiedlicher Durchmesser vorgesehen. Die Öffnungen mit unterschiedlichem Durchmesser, bezeichnet durch die Bezugszeichen 36.1, 36.2 und 36.3, dienen als Schablonen 36 zur Ausführung von Ausfräsungen beispielsweise zum Einbau von Steckdosen in Raumwänden beim Innenausbau. Das über die Auflagefläche 8 bzw. 9 hervorstehende Fräswerkzeug 19, aufgenommen im von dem Elektrowerkzeug 17 angetriebenen Spannfutter 20, läßt sich entlang der kreisrunden Öffnung 36.1, 36.2 und 36.3 bewegen, so daß eine exakte Ausfräsung in einer der Schablonen 36.1, 36.2 und 36.3 mit unterschiedlichem Durchmesser erfolgen kann. In vorteilhafter Weise sind die Durchmesser der einzelnen Schablonen 36.1, 36.2 und 36.3 an der Führungsschiene 35 so gewählt, daß diese Durchmesser in Durchmessern von Standardgrößen von Steckdosen für den Innenausbau entsprechen.

### Bezugszeichenliste

- 1: Führungsschiene
- 2: Führungsrippe
- 3: Kante
- 4: Spannring
- 5: Spannschraube
- 6: Ansatz
- 7: Spanaustrag
- 8: Auflage
- 9: Auflagefläche
- 10: Führungsnut
- 11: Vertikalverstellung Elektrowerkzeug
- 12: Führungsprofil
- 13: Längsnut
- 14: Verstellweg
- 15: Knebelschraube
- 16: Segmentachse
- 17: Elektrowerkzeug
- 18: Sitzfläche
- 19: Einsatzwerkzeug
- 20: Spannfutter
- 21: Rastnase
- 22: Umfangsnut
- 23: Kreisrunde Öffnung
- 24: Kantenführung
- 25: Aufsteckwerkzeug (Schablone)
- 26: Öffnung
- 27: Rastöffnung
- 28: Stehbund
- 29: Rastzunge
- 30: Aussparung
- 31: Aufsteckerstreckung
- 32: Bajonettverschluß
- 33: Öffnung
- 34: Ausnehmung
- 35: Führungsschiene mit Schablone und Rippe
- 36: Schablone

- 36.1: Erster Schablonendurchmesser
- 36.2: Zweiter Schablonendurchmesser
- 36.3: Dritter Schablonendurchmesser

## Patentansprüche

1. Elektrowerkzeug mit in einem Gehäuse aufgenommenen Antrieb, wobei das Elektrowerkzeug eine Welle mit daran aufgenommenen Spannfutter (20) zur Aufnahme eines Einsatzwerkzeuges (19) umfaßt, wobei das Spannfutter (20) von einer ringförmigen Auflage (8, 9) umschlossen ist, **dadurch gekennzeichnet, daß** die Auflage die Auflagenführung des Elektrowerkzeuges an einer Führungsschiene (1,35) ermöglichende Elemente (10) sowie Aufnahmen (21, 22; 31, 32, 33) für auswechselbare Aufsteckwerkzeuge (25) umfaßt.

2. Elektrowerkzeug gemäß Anspruch 1, **dadurch gekennzeichnet, daß** an der Auflagefläche (9), das Verfahren von Elektrowerkzeugen (7) entlang einer Führungsrippe (2) ermöglichende Ausnehmungen (10) vorgesehen sind.

3. Elektrowerkzeug gemäß Anspruch 1, **dadurch gekennzeichnet, daß** die Aufnahme als Rastvorsprünge (21) oder als Umlaufnut (22) konfiguriert sind.

4. Elektrowerkzeug gemäß Anspruch 1, **dadurch gekennzeichnet, daß** die Aufnahme als Bajonettverschluß (32) an der Auflage (8, 9) ausgeführt sind.

5. Elektrowerkzeug gemäß Anspruch 1, **dadurch gekennzeichnet, daß** in den Aufnahmen (21, 22; 31, 32) und (33) an der Auflagefläche (9) als Aufsteckwerkzeuge ausgebildete Schablonen (25) aufsteck- und verrastbar sind.

6. Elektrowerkzeug gemäß Anspruch 5, **dadurch gekennzeichnet**, däß die Schablone (25) als Kunststoffteile mit zentraler Öffnung (26) ausgebildet und am Umfang mit mindestens einer Rastzunge (29) versehen sind.

7. Elektrowerkzeug gemäß Anspruch 5, **dadurch gekennzeichnet, daß** an der Schablone (25) ein Stehbund (28) ausgebildet ist, in welchem die Rastzungen (29) durch beidseitige Ausnehmungen (30) definiert sind.

8. Elektrowerkzeug gemäß Anspruch 5, **dadurch gekennzeichnet, daß** der Boden der Schablone (25) mit einer das Entlangführen des Elektrowerkzeuges (17) an einer Führung (10) gestattenden Ausnehmung versehen ist.

9. Elektrowerkzeug gemäß Anspruch 5, **dadurch gekennzeichnet, daß** durch die Dicke des Bodenbereiches an der Anlage (8, 9) verrastbaren Schablone (25) die Arbeitstiefe des im Spannfutter (20) des Elektrowerkzeuges (17) aufgenommenen Einsatzwerkzeuges (19) beeinflußbar ist.

10. Elektrowerkzeug gemäß Anspruch 1, **dadurch gekennzeichnet, daß** die Führungsschiene (1,35) mit einer Führungsrippe (2) versehen ist und Bearbeitungsschablonen (33) unterschiedlichen Durchmessers (36.1, 36.2) und (36.3) enthält.

11. Elektrowerkzeug gemäß Anspruch 1, **dadurch gekennzeichnet, daß** die Auflage (8, 9) der in vertikaler Richtung am verstellbaren Ansatz (6, 12, 13) in Bezug auf das Elektrowerkzeug (17) höhenverstellbar ist.

## Claims

1. Electric tool having a drive mounted in a housing, the electric tool comprising a shaft with a chuck (20) mounted thereon for mounting an application tool (19), the chuck (20) being enclosed by an annular support (8, 9), **characterized in that** the support comprises elements (10) enabling the electric tool to be supported and guided on a guide rail (1, 35) and receptacles (21, 22; 31, 32, 33) for interchangeable slip-on tools (25).

2. Electric tool according to Claim 1, **characterized in that** recesses (10) enabling electric tools (17) to travel along a guide rib (2) are provided on the supporting surface (9).

3. Electric tool according to Claim 1, **characterized in that** the receptacles are configured as latching projections (21) or as an encircling groove (22).

4. Electric tool according to Claim 1, **characterized in that** the receptacles are designed as a bayonet catch (32) on the support (8, 9).

5. Electric tool according to Claim 1, **characterized in that** templates (25) designed as slip-on tools can be slipped on and latched in place in the receptacles (21, 22; 31, 32, 33) on the supporting surface (9).

6. Electric tool according to Claim 5, **characterized in that** the templates (25) are designed as plastic parts having a central opening (26) and are provided at the circumference with at least one latching tongue (29).

7. Electric tool according to Claim 5, **characterized in that** an upright collar (28) is formed on the template (25), the latching tongues (29) being defined in this upright collar (28) by recesses (30) on both sides.

8. Electric tool according to Claim 5, **characterized in that** the base of the template (25) is provided with a recess allowing the electric tool (17) to be guided along a guide (2).

9. Electric tool according to Claim 5, **characterized in that** the working depth of the application tool (19) mounted in the chuck (20) of the electric tool (17) can be influenced by the thickness of the base region of the template (25) which can be latched on the support (8, 9).

10. Electric tool according to Claim 1, **characterized in that** the guide rail (1, 35) is provided with a guide rib (2) and contains processing templates (33) of different diameter (36.1, 36.2) and 36.3).

11. Electric tool according to Claim 1, **characterized in that** the support (8, 9) is vertically adjustable with regard to the electric tool (17) at the adjustable extension (6, 12, 13).

## Revendications

1. Outil électrique muni d'un entraînement logé dans un boîtier et comprenant un arbre logeant un mandrin (20) servant à recevoir un outil à insérer (19), le mandrin (20) étant entouré d'une assise annulaire (8, 9),
**caractérisé en ce que**
l'assise comprend des éléments (10) permettant le guidage d'appui de l'outil électrique sur un rail de guidage (1, 35) ainsi que des logements (21, 22 ; 31, 32 ; 33) pour des outils enfichables (25), interchangeables.

2. Outil électrique selon la revendication 1,
**caractérisé en ce que**
la surface d'appui (9) comporte des évidements (10) permettant le déplacement d'outils électriques (7) le long d'une nervure de guidage (2).

3. Outil électrique selon la revendication 1,
**caractérisé en ce que**
le logement est en forme de saillies d'encliquetage (21) ou de rainure périphérique (22).

4. Outil électrique selon la revendication 1,
**caractérisé en ce que**
le logement est en forme de fermeture à baïonnette (32) sur l'assise (8, 9).

5. Outil électrique selon la revendication 1,
**caractérisé en ce que**
des gabarits (25) en forme d'outils enfichables peuvent être mis en place et verrouillés dans les logements (21, 22 ; 31, 32, 33) sur la surface d'appui (9).

6. Outil électrique selon la revendication 5,
**caractérisé en ce que**
les gabarits (25) sont en forme de pièces en matière plastique munies d'une ouverture centrale (26) avec en périphérie au moins une languette d'encliquetage (29).

7. Outil électrique selon la revendication 5,
**caractérisé en ce que**
le gabarit (25) comporte un collier vertical (28) avec des évidements (30) des deux côtés qui définissent les languettes d'encliquetage (29).

8. Outil électrique selon la revendication 5,
**caractérisé en ce que**
le fond du gabarit (25) est pourvu d'un évidement permettant le guidage de l'outil électrique (17) le long d'un guide (10).

9. Outil électrique selon la revendication 5,
**caractérisé en ce que**
la zone de fond du gabarit (25) pouvant se bloquer sur l'assise (8, 9) a une épaisseur pour faire varier la profondeur de travail de l'outil encastrable (19) logé dans le mandrin (20) de l'outil électrique (17).

10. Outil électrique selon la revendication 1,
**caractérisé en ce que**
le rail de guidage (1, 35) est pourvu d'une rainure de guidage (2) et contient des gabarits d'usinage (33) de différents diamètres (36.1, 36.2) et (36.3).

11. Outil électrique selon la revendication 1,
**caractérisé en ce que**
la base (6, 12, 13) réglable en direction verticale a son assise (8, 9) réglable en hauteur par rapport à l'outil électrique (17).
